# EUROPÄISCHE PATENTSCHRIFT

(11) **EP 2 242 807 B1**
(45) Veröffentlichungstag und Bekanntmachung des Hinweises auf die Patenterteilung: **01.02.2017**
(21) Anmeldenummer: 09710378.2
(22) Anmeldetag: 12.02.2009
(51) Int. Cl.: C09D 4/00

(54) **UV-HÄRTBARE ZUSAMMENSETZUNG UND IHRE VERWENDUNG ALS BESCHICHTUNGSMITTEL**
UV-CURABLE COMPOSITION AND THE USE THEREOF AS A COATING MEANS
COMPOSITION DURCISSABLE AUX UV, ET SON UTILISATION COMME PRODUIT DE REVÊTEMENT

(30) Priorität: 14.02.2008 DE 102008010346
(43) Veröffentlichungstag der Anmeldung: 27.10.2010
(73) Patentinhaber: KARL WÖRWAG LACK- UND FARBENFABRIK GMBH & CO. KG, 70435 Stuttgart (DE)
(72) Erfinder: HILLER, Siegfried, 74199 Unterheinriet (DE); KAVANOZIS, Sevastos, 70499 Stuttgart (DE)
(74) Vertreter: Patentanwaltskanzlei Cartagena
(86) Internationale Anmeldenummer: PCT/EP2009/000960
(87) Internationale Veröffentlichungsnummer: WO 2009/100899

(56) Entgegenhaltungen:
- DE-A1- 10 027 670
- DE-A1-102006 012 274
- US-A1- 2003 008 934
- US-A1- 2006 199 874

## Beschreibung

Die vorliegende Erfindung betrifft die Verwendung einer UV-härtbaren Zusammensetzung zur Lackierung von Fahrzeugachsen.

Teile von Nutzfahrzeugen, Bau- und Landmaschinen wie z. B. Nutzfahrzeugachsen sind im Betrieb häufig sehr stark durch Steinschlag und Korrosion belastet. Durch geeignete Lackierung dieser Teile versucht man, einen einfachen und effizienten Schutz gegen derartige chemische und mechanische Belastungen bereitzustellen.

Aus der US 2006/0199874 A1 und der DE 102006012274 A1 sind UVhärtbare Zusammensetzungen enthaltend Epoxyacrylate und Polyesteracrylate, Photoinitiatioren, Füllstoffe oder Pigmente und Reaktivverdünner bekannt. Bei der aus der US 2006/0199874 A1 bekannten Zusammensetzung handelt es sich um eine Tinte. Die aus der DE 102006012274 A1 bekannten Zusammensetzungen sind zur Beschichtung des Innenraums von Kraftfahrzeugen bzw. zur Beschichtung von Holzformteilen vorgesehen.

Der vorliegenden Erfindung lag die Aufgabe zugrunde, eine technische Lösung aufzufinden, welche die Bereitstellung von hochbelastbaren Teilen für Nutzfahrzeuge, Bau- und Landmaschinen ermöglicht, die insbesondere im Hinblick auf den Schutz vor Korrosion und Steinschlag den höchsten Anforderungen genügen. Besonderes Augenmerk war dabei auf die Bereitstellung einer Zusammensetzung gerichtet, die sich zur Lackierung von Kraftfahrzeugachsen, insbesondere Nutzfahrzeugachsen, eignet. Die Zusammensetzung sollte beim Lackieren eine gute Deckkraft bei gleichzeitig guten Härtungs- und Haftungseigenschaften auf verschiedensten Untergründen aufweisen. Des Weiteren sollte sich die Zusammensetzung mittels einfacher, herkömmlicher Applikationsverfahren auftragen lassen.

Diese Aufgabe wird gelöst durch die Verwendung einer Zusammensetzung mit den Merkmalen gemäß Anspruch 1 zur Lackierung von Fahrzeugachsen. Bevorzugte Ausführungsformen der erfindungsgemäßen Verwendung sind in den abhängigen Ansprüchen 2 bis 13 beschrieben.

Eine im Rahmen der erfindungsgemäßen Verwendung zum Einsatz kommende Zusammensetzung ist durch elektromagnetische Strahlung, insbesondere durch UV-Strahlung, härtbar. Als photochemisch vernetzbare Komponente weist sie mindestens ein Acrylat auf, wobei dieses Acrylat ausgewählt ist aus der Gruppe, die umfaßt: aromatisches Epoxyacrylat, aliphatisches Epoxyacrylat und Polyesteracrylat, vorzugsweise aliphatisches Polyesteracrylat. Dementsprechend kann die photochemisch vernetzbare Komponente entweder aus mindestens einem aromatischen Epoxyacrylat oder aus mindestens einem aliphatischen Epoxyacrylat oder aus mindestens einem Polyesteracrylat oder aus beliebigen Mischungen dieser drei Acrylatarten bestehen.

Besonders bevorzugt enthält die Zusammensetzung als photochemisch vernetzbare Komponente stets mindestens ein aliphatisches Epoxyacrylat sowie zusätzlich entweder mindestens ein aromatisches Epoxyacrylat oder ein vorzugsweise aliphatisches Polyesteracrylat.

Darüber hinaus enthält die Zusammensetzung mindestens einen, vorzugsweise zwei oder mehr Reaktivverdünner, mindestens einen Photoinitiator, mindestens einen Füllstoff und/oder mindestens ein Pigment. Vorzugsweise sind auch ein oder mehrere Hilfsadditive enthalten.

Die Zusammensetzung umfasst in besonders bevorzugten Ausführungsformen als photochemisch vernetzbare Komponenten sowohl mindestens ein aliphatisches Epoxyacrylat als auch mindestens ein aromatisches Epoxyacrylat. In diesen Fällen ist in der photochemisch vernetzbaren Komponente bevorzugt kein Polyesteracrylat enthalten. Bevorzugt weist die Zusammensetzung als vernetzbare Komponenten dann nur das mindestens eine aliphatische Epoxyacrylat und das mindestens eine aromatische Epoxyacrylat auf.

In weiteren besonders bevorzugten Ausführungsformen weist die Zusammensetzung als photochemisch vernetzbare Komponenten sowohl mindestens ein aliphatisches Epoxyacrylat als auch mindestens ein Polyesteracrylat, insbesondere mindestens ein aliphatisches und/oder mindestens ein aromatisches Polyesteracrylat, auf. In diesen Fällen ist dann bevorzugt kein aromatisches Epoxyacrylat in der photochemisch vernetzbaren Komponente enthalten. Die Abwesenheit des aromatischen Epoxyacrylats kann den Vorteil haben, daß Vergilbungseffekte, die auftreten, wenn solche aromatischen Komponenten dem Licht ausgesetzt werden, vermieden werden können. Bevorzugt weist die Zusammensetzung als vernetzbare Komponenten dann nur das mindestens eine aliphatische Epoxyacrylat und das mindestens eine Polyesteracrylat, insbesondere das mindestens eine aliphatische Polyesteracrylat, auf.

Unter einem aromatischen Epoxyacrylat soll im Rahmen der vorliegenden Erfindung insbesondere ein Epoxyacrylat verstanden werden, das eine oder mehrere aromatische Gruppen aufweist. Ein aliphatisches Epoxyacrylat soll dagegen vorliegend insbesondere keine aromatischen Reste oder Gruppen haben und bevorzugt lediglich C-Atome aufweisen, die in geraden oder verzweigten Ketten angeordnet sind. Dies gilt analog für das mindestens eine aliphatische oder aromatische Polyesteracrylat.

Alle erfindungsgemäß einsetzbaren Acrylate, insbesondere sowohl das mindestens eine aromatische Epoxyacrylat als auch das mindestens eine aliphatische Epoxyacrylat, weisen in bevorzugten Ausführungsformen mindestens zwei, vorzugsweise zwischen 2 und 20, ethylenische Doppelbindungen pro Molekül auf.

Bei dem mindestens einen aromatischen Epoxyacrylat handelt es sich vorzugsweise um ein novolacmodifiziertes Epoxyacrylat, insbesondere um ein Epoxynovolac-tri-Acrylat. Letzteres wird bevorzugt als Epoxynovolac-tri-Acrylat 70 %-ig in 2-Phenoxyethyl-Acrylat (Monomer) eingesetzt.

Der Einsatz novolacmodifizierter Epoxyacrylate wirkt sich vor allem im Hinblick auf den Korrosionsschutz sowie auf die Chemikalien- und Schwitzwasserbeständigkeit der Zusammensetzung bzw. daraus hergestellter Lacke sehr vorteilhaft aus.

Das mindestens eine aliphatische Epoxyacrylat ist bevorzugt ein polyestermodifiziertes Epoxyacrylat, insbesondere ein polyestermodifiziertes Epoxy-di-Acrylat. Der Einsatz polyestermodifizierter Epoxy-di-Acrylate bewährt sich insbesondere im Hinblick auf die Haftung und die mechanischen Eigenschaften (Schutz gegen Steinschlag) der Zusammensetzung bzw. daraus hergestellter Lacke.

Bei dem erfindungsgemäß einsetzbaren Polyesteracrylat handelt es sich vorzugsweise um ein aliphatisches Polyesteracrylat, insbesondere um ein Polyester-di-Acrylat. Ein erfindungsgemäß einsetzbares Produkt ist z.B. das Produkt UVP6000 der Firma Kromachem, Leverkusen, Deutschland.

Als Reaktivverdünner werden im Rahmen der vorliegenden Erfindung vorzugsweise solche gewählt, die nicht flüchtig sind und somit in die Lackmatrix eingebaut werden können. So können durch geeignete Wahl des Reaktivverdünners auch die Endeigenschaften eines Lackes beeinflusst werden.

Bevorzugt enthält die Zusammensetzung als Reaktivverdünner ein Tetrahydrofurfuryl-Acrylat. Tetrahydrofurfuryl-Acrylate zeigen eine sehr gute Verdünnungswirkung. Darüber hinaus wurde bei Wahl dieses Reaktivverdünners überraschenderweise auch eine Verbesserung des Schutzes vor Steinschlag beobachtet.

An Stelle des Tetrahydrofurfuryl-Acrylat-Reaktivverdünners oder zusätzlich zu diesem kann die erfindungsgemäße Zusammensetzung in besonders bevorzugten Ausführungsformen ein 2-Phenoxyethyl-Acrylat enthalten. Dieses wirkte sich überraschenderweise unter anderem auch sehr positiv auf die Antikorrosionseigenschaften der Zusammensetzung bzw. eines gehärteten Lackes aus dieser aus.

Als Photoinitiator weist die Zusammensetzung vorzugsweise ein α-Hydroxyketon, insbesondere 2-Hydroxy-2-methyl-1-phenyl-propan-1-on, auf.

Weiterhin kann es bevorzugt sein, dass die Zusammensetzung ein Bis-Acyl-Phosphin als Photoinitiator enthält, insbesondere ein Bis(2,4,6-trimethylbenzoyl)phenylphosphinoxid.

Die genannten Photoinitiatoren sind für die radikalische Photopolymerisation zuständig, wenn die Zusammensetzung mit elektromagnetischer Strahlung gehärtet wird. Es wurde gefunden, dass die Verwendung von Bis-Acyl-Phosphinen für eine gute Durchhärtung sehr förderlich ist. Mit Photoinitiatoren auf Basis von α-Hydroxyketonen lassen sich klebfreie und sehr harte Oberflächen erzielen.

Wie bereits erwähnt, enthält die Zusammensetzung vorzugsweise ein oder mehrere Hilfsadditive. Diese dienen insbesondere zur Einstellung und Stabilisierung der Eigenschaften der Zusammensetzung und des daraus resultierenden gehärteten Lackes. Beispiele hierfür sind Lichtschutzmittel wie handelsübliche UV-Absorber (Hydroxybenzophenone, Benzotriazole, Oxalanilide) und Radikalfänger wie sterisch gehinderte Amine (HALS).

Besonders bevorzugt weist sie als Hilfsadditiv einen Haftvermittler auf, vorzugsweise einen auf Basis von (Meth)acrylat, insbesondere ein Phosphorsäureester-Methacrylat. Ein geeigneter Haftvermittler ist beispielsweise Ebecryl® 171, ein Produkt der Firma Cytec.

Des Weiteren ist es bevorzugt, dass die Zusammensetzung als Hilfsadditiv mindestens einen Entschäumer, insbesondere auf Polysiloxanbasis, enthält. Als Entschäumer geeignet ist beispielsweise Tego® Twin 4000, ein Produkt der Firma Tego.

Ferner können als Hilfsadditiv ein oder mehrere rheologische Additive, insbesondere auf Silikatbasis, in der Zusammensetzung enthalten sein. Ein Beispiel hierfür ist Bentone® SD2, das von der Firma Rheox vertrieben wird.

Auch Verdicker, insbesondere anorganische Verdicker wie Kieselsäure, sowie gegebenenfalls auch Verlaufsmittel können in der Zusammensetzung als Hilfsadditiv enthalten sein.

Als Pigmente können der Zusammensetzung sowohl anorganische als auch organische Pigmente zugesetzt sein. Beispielhaft seien hier als Pigmente Russ, Titandioxid und Eisenoxid erwähnt.

Als Füllstoffe kommen alle dem Fachmann bekannten entsprechende Zusätze wie z. B. Kieselgele, Kalksteinmehl, Dolomit, Bariumsulfat, Aluminiumoxid oder Talkum in Betracht. Die Zusammensetzung ist allerdings dann besonders bevorzugt, wenn sie als Füllstoff Quarzpulver und/oder Talkum enthält.

Vorteilhaft ist insbesondere der Einsatz von Pigmenten und Füllstoffen in Form von feinvermahlenen Typen mit einer mittleren Teilchengröße von < 20 µm, bevorzugt <10 µm.

Zur besseren Einarbeitung der Pigmente und/oder Füllstoffe kann die Zusammensetzung Netz- und Dispergiermittel als Hilfsadditive enthalten. Geeignete Netz- und Dispergiermittel sind dem Fachmann bekannt.

Bei bevorzugten Ausführungsformen der Zusammensetzung sind die Acrylate, die die photochemisch vernetzbare Komponente bilden, in folgenden Anteilen enthalten, nämlich:
- das mindestens eine aromatische Epoxyacrylat in Anteilen bis zu 35 Gew.-%.
- das mindestens eine aliphatische Epoxyacrylat in Anteilen bis zu 25 Gew.-%.
- das mindestens eine Polyesteracrylat, insbesondere das mindestens eine aliphatische Polyesteracrylat, in Anteilen bis zu 50 Gew.-%.

Besonders bevorzugte Ausführungsformen der Zusammensetzung zeichnen sich dadurch aus, dass sie die folgenden Bestandteile in folgenden Anteilen enthalten:
- zwischen 5 und 25 Gew.-% des mindestens einen aliphatischen Epoxyacrylats,
- zwischen 10 und 35 Gew.-% des mindestens einen aromatischen Epoxyacrylats und/oder zwischen 10 und 50 Gew.-% des mindestens einen Polyesteracrylats, insbesondere des mindestens einen aliphatischen Polyesteracrylats,
- zwischen 20 und 50 Gew.-% des mindestens einen Reaktivverdünners,
- zwischen 1 und 10 Gew.-% des mindestens einen Haftvermittlers,
- zwischen 1 und 10 Gew.-% des mindestens einen Photoinitiators,
- zwischen 15 und 35 Gew.-% des mindestens einen Füllstoffs und/oder des mindestens einen Pigments,
- zwischen 0,5 Gew.-% und 10 Gew.-% mindestens eines weiteren Hilfsadditivs neben dem mindestens einen Haftvermittler, insbesondere aus der Gruppe mit Entschäumern, rheologischen Additiven, Verlaufsmitteln, Dispergiermitteln und Verdickern.

In der Summe ergänzen sich die angegebenen Anteile vorzugsweise zu 100 Gew.-%.

Grundsätzlich kann die Zusammensetzung einen Anteil an einem oder mehreren Lösungsmitteln enthalten. Vorzugsweise ist sie jedoch im Wesentlichen frei von Lösungsmitteln. Die Einstellung der Viskosität kann stattdessen z. B. durch Zugabe geeigneter Mengen an Reaktivverdünnern erfolgen.

Die Viskosität der erfindungsgemäß einsetzbaren Acrylate (liegen in der Regel als Oligomere vor) bewegt sich bevorzugt im Bereich zwischen größer 5 Pas (bestimmt mittels eines Rotationsviskosimeters nach DIN EN ISO 3219). Die Viskosität der erfindungsgemäßen Zusammensetzung liegt vorzugsweise im Bereich zwischen 100 mPas und 2.000 mPas, wobei innerhalb dieses Bereichs Werte zwischen 200 mPas und 1.000 mPas weiter bevorzugt sind.

Wie eingangs erwähnt, wurde die Zusammensetzung insbesondere auch für die Lackierung von Fahrzeugachsen, insbesondere von Nutzfahrzeugachsen, entwickelt. Gegenstand der vorliegenden Erfindung ist entsprechend die Verwendung der Zusammensetzung zur Lackierung von Substraten wie Fahrzeugachsen, insbesondere von Nutzfahrzeugachsen

Zur Lackierung der Substrate wird eine Zusammensetzung auf das zu lackierende Substrat aufgebracht und anschließend ausgehärtet.

Die Aushärtung der Zusammensetzung erfolgt vorzugsweise unter Inert-gas-Atmosphäre, allerdings ist diese Maßnahme nicht zwingend erforderlich. Vorzugsweise erfolgt das Aushärten mit UV-Strahlung.

Der beschriebene Lack bietet hervorragenden Schutz vor Flächen-und Kantenkorrosion sowie vor Steinschlag. Darüber hinaus weist er eine Dauerhitzebestandigkeit von bis zu 140 °C auf. Er haftet sehr gut auf Metallen wie Stahl und Grauguß sowie auf diversen vorbeschichteten Anbauteilen (Kunstharzgrundierung, Zink, Zink- oder Eisenphosphatierung, Pulverbeschichtung, KTL). Insbesondere in lösemittelfreier Form kann eine Aushärtung der beschriebenen Zusammensetzung zu einem Lack innerhalb von wenigen Sekunden erfolgen. Mit konventionellen Lacken kann der Lack problemlos überlackiert werden (Reparaturlackierung).

Weitere Merkmale der Erfindung ergeben sich aus dem Beispiel in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiel

Eine bevorzugte Ausführungsform einer im Rahmen der erfindungsgemäßen Verwendung einsetzbaren Zusammensetzung weist die folgenden 17 Bestandteile auf:

| | Name | Chemische Bezeichnung | Gehalt |
|---|---|---|---|
| 1 | Photocryl E203/30PE (Fa. PC-Resin) | Epoxynovolac-tri-Acrylat 70%ig in 2-Phenoxyethyl-Acrylat (Monomer) | 21,90 |
| 2 | Photocryl E207 (Fa. PC-Resin) | Polyestermod ifiziertes Epoxy-di-Acrylat | 11,27 |
| 3 | Sartomer 285 (Fa. Cray Valley) | Tetrahydrofurfuryl-Acrylat THFA (Monomer, MG 156) | 14,40 |
| 4 | Sartomer 399C (Fa. Cray Valley) | 2-Phenoxyethyl-Acrylat PEA (Monomer, MG 192) | 14,25 |
| 5 | Darocure 1173 (Fa. Ciba) | 2-Hydroxy-2-methyl-I-phenyl-propan-I-on (MG 164,2) | 3,20 |
| 6 | Irgacure® 819 (Fa.Ciba) | Bis(2,4,6-trimethylbenzoly)-Phenyl-phos-phinoxid (MG 418,5) | 0,80 |
| 7 | Ebecryl® 171 (Fa.Cytec) | Phosphorsäureester-Methacrylat | 6,00 |
| 8 | Sikron SF 800 (Fa. Quarzwerke) | Eisenfreies Quarzmehl | 20,00 |
| 9 | Luzenac 10M00S (Fa. Luzenac) | Talkum (10µm Korngröße mit wenig Carbonatanteil) | 2,50 |
| 10 | Westmin 20 (Fa. Omya) | Mg-Silicate (15µm Komgröße) | 2,50 |
| 11 | HDK® H18 (Fa. Wacker) | Hydrophobe, amorphe Kieselsaure | 1,60 |
| 12 | Bentone® SD2 (Fa. Rheox) | Bentonit, Schichtsilikat | 0,38 |
| 13 | Flammruss 101 (Fa.Degussa) | Grober Russ (95 nm Komgröße) | 0,30 |
| 14 | Kronos 2160 (Fa.Kronos) | Titandioxid (Rutiltyp) | 0,49 |
| 15 | Bayferrox® 3920 (Fa. Bayer) | Eisenoxid α-FeOOH | 0,08 |
| 16 | Bayferrox® 130M (Fa. Bayer) | Mikronisiertes Eisenoxid | 0,035 |
| 17 | Tego® Twin 4000 (Fa.Tego) | Polysiloxanderivat | 0,30 |

Zur Erfüllung der VOC-Verordnung wurde die Zusammensetzung absolut lösemittelfrei rezeptiert. Zur Einstellung der Viskostität wurden ausgewählte Reaktivverdünner verwendet. Die gewählten Reaktivverdünner haben den Vorteil, daß sie in die Lackmatrix eingebaut werden und somit nicht flüchtig sind. Die Zusammensetzung gemäß Beispiel hat eine Viskosität im Bereich zwischen 500 und 600 mPas.

Die Zusammensetzung lässt sich hervorragend applizieren und durch UV-Strahlung sehr schnell aushärten. Die Kombination aus zwei Photoinitiatoren sorgt dafür, daß der aufgetragene Lack an jeder beliebigen Stelle problemlos aushärtet.

In ausgehärteter Form weist die Zusammensetzung hervorragende Eigenschaften im Hinblick auf Steinschlag- und Korrosionsschutzeigenschaften auf.

## Patentansprüche

1. Verwendung einer UV-härtbaren Zusammensetzung, die
- als photochemisch vernetzbare Komponente mindestens ein aliphatisches Epoxyacrylat sowie mindestens ein Acrylat aus der Gruppe umfassend aromatisches Epoxyacrylat und Polyesteracrylat,
- mindestens einen, vorzugsweise zwei oder mehr Reaktivverdünner,
- mindestens einen Photoinitiator,
- mindestens einen Füllstoff und/oder mindestens ein Pigment sowie
- ein oder mehrere Hilfsadditive
enthält, zur Lackierung von Fahrzeugachsen.

2. Verwendung nach Anspruch 1, **dadurch gekennzeichnet, dass** die Zusammensetzung als photochemisch vernetzbare Komponente mindestens ein aliphatisches Epoxyacrylat und mindestens ein aromatisches Epoxyacrylat umfasst.

3. Verwendung nach Anspruch 1, **dadurch gekennzeichnet, dass** die Zusammensetzung als photochemisch vernetzbare Komponente mindestens ein aliphatisches Epoxyacrylat und mindestens ein aliphatisches Polyesteracrylat umfasst.

4. Verwendung nach einem der vorhergehenden Ansprüche, **dadurch gekennzeichnet, dass** die genannten Acrylate 2 bis 20 ethylenische Doppelbindungen pro Molekül aufweisen.

5. Verwendung nach einem der Ansprüche 1, 2 oder 4, **dadurch gekennzeichnet, dass** es sich bei dem aromatischen Epoxyacrylat um ein novolacmodifiziertes Epoxyacrylat, insbesondere um ein Epoxynovolac-tri-Acrylat, handelt.

6. Verwendung nach einem der vorhergehenden Ansprüche, **dadurch gekennzeichnet, dass** es sich bei dem aliphatischen Epoxyacrylat um ein polyestermodifiziertes Epoxyacrylat, insbesondere um ein polyestermodifiziertes Epoxy-di-Acrylat, handelt.

7. Verwendung nach einem der Ansprüche 1 oder 3 bis 6, **dadurch gekennzeichnet, daß** es sich bei dem Polyesteracrylat um ein Polyester-di-Acrylat, handelt.

8. Verwendung nach einem der vorhergehenden Ansprüche, **dadurch gekennzeichnet, dass** sie als Reaktivverdünner ein Tetrahydrofurfuryl-Acrylat und/oder ein 2-Phenoxyethyl-Acrylat enthält.

9. Verwendung nach einem der vorhergehenden Ansprüche, **dadurch gekennzeichnet, dass** sie als Photoinitiator ein α-Hydroxyketon und/oder ein Bis-Acyl-Phosphin enthält.

10. Verwendung nach einem der vorhergehenden Ansprüche, **dadurch gekennzeichnet, dass** sie als Hilfsadditiv mindestens einen Haftvermittler und/oder mindestens einen Entschäumer und/oder mindestens ein rheologisches Additiv und/oder mindestens einen Verdicker und/oder mindestens ein Verlaufsmittel und/oder mindestens ein Dispergiermittel und/oder als Füllstoff Quarzpulver und/oder Talkum und/oder als Pigment Russ, Titandioxid und/oder Eisenoxid enthält.

11. Verwendung nach einem der vorhergehenden Ansprüche, **dadurch gekennzeichnet, dass** sie die folgenden Bestandteile in folgenden Anteilen enthält (wobei sich die Anteile zu 100 Gew.-% ergänzen):
- zwischen 5 und 25 Gew.-% des mindestens einen aliphatischen Epoxyacrylats,
- zwischen 10 und 35 Gew.-% des mindestens einen aromatischen Epoxyacrylats und/oder zwischen 10 und 50 Gew.-% des mindestens einen Polyesteracrylats,
- zwischen 20 und 50 Gew.-% des mindestens einen Reaktivverdünners,
- zwischen 1 und 10 Gew.-% des mindestens einen Haftvermittlers,
- zwischen 1 und 10 Gew.-% des mindestens einen Photoinitiators,
- zwischen 15 und 35 Gew.-% des mindestens einen Füllstoffs und/ oder des mindestens einen Pigments,
- zwischen 0,5 Gew.-% und 10 Gew.-% mindestens eines weiteren Hilfsadditivs neben dem mindestens einen Haftvermittler.

12. Verwendung nach einem der vorhergehenden Ansprüche, **dadurch gekennzeichnet, dass** sie frei von Lösungsmitteln ist.

13. Verwendung nach einem der vorhergehenden Ansprüche, **dadurch gekennzeichnet, dass** sie eine Viskosität im Bereich zwischen 100 mPas und 2.000 mPas (bestimmt mittels eines Rotationsviskosimeters nach DIN EN ISO 3219) aufweist.

## Claims

1. Use of a UV-curable composition which contains
- as a photochemically crosslinkable component, at least one aliphatic epoxy acrylate and at least one acrylate from the group consisting of aromatic epoxy acrylate and polyester acrylate,
- at least one reactive diluent, preferably two or more reactive diluents,
- at least one photoinitiator,
- at least one filler and/or at least one pigment and
- one or more auxiliary additives,
for coating vehicle axles.

2. Use according to Claim 1, **characterized in that** the composition comprises, as a photochemically crosslinkable component, at least one aliphatic epoxy acrylate and at least one aromatic epoxy acrylate.

3. Use according to Claim 1, **characterized in that** the composition comprises, as a photochemically crosslinkable component, at least one aliphatic epoxy acrylate and at least one aliphatic polyester acrylate.

4. Use according to any of the preceding claims, **characterized in that** said acrylates have 2 to 20 ethylenic double bonds per molecule.

5. Use according to any of Claims 1, 2 and 4, **characterized in that** the aromatic epoxy acrylate is a novolac-modified epoxy acrylate, in particular an epoxy novolac triacrylate.

6. Use according to any of the preceding claims, **characterized in that** the aliphatic epoxy acrylate is a polyester-modified epoxy acrylate, in particular a polyester-modified epoxy diacrylate.

7. Use according to any of Claims 1 and 3 to 6, **characterized in that** the polyester acrylate is a polyester diacrylate.

8. Use according to any of the preceding claims, **characterized in that** it contains a tetrahydrofurfuryl acrylate and/or a 2-phenoxyethyl acrylate as a reactive diluent.

9. Use according to any of the preceding claims, **characterized in that** it contains an α-hydroxyketone and/or a bisacylphosphine as a photoinitiator.

10. Use according to any of the preceding claims, **characterized in that** it contains at least one adhesion promoter and/or least one antifoam and/or at least one rheological additive and/or at least one thickener and/or at least one leveling agent and/or at least one dispersant as an auxiliary additive and/or quartz powder and/or talc as a filler and/or carbon black, titanium dioxide and/or iron oxide as a pigment.

11. Use according to any of the preceding claims, **characterized in that** it contains the following constituents in the following proportions (the proportions summing to 100% by weight):
- from 5 to 25% by weight of the at least one aliphatic epoxy acrylate,
- from 10 to 35% by weight of the at least one aromatic epoxy acrylate and/or from 10 to 50% by weight of the at least one polyester acrylate,
- from 20 to 50% by weight of the at least one reactive diluent,
- from 1 to 10% by weight of the at least one adhesion promoter,
- from 1 to 10% by weight of the at least one photoinitiator,
- from 15 to 35% by weight of the at least one filler and/or of the at least one pigment,
- from 0.5% by weight to 10% by weight of the at least one further auxiliary additive in addition to the at least one adhesion promoter.

12. Use according to any of the preceding claims, **characterized in that** it is free of solvents.

13. Use according to any of the preceding claims, **characterized in that** it has a viscosity in the range from 100 mPa·s to 2000 mPa·s (determined by means of a rotary viscometer according to DIN EN ISO 3219).

## Revendications

1. Utilisation d'une composition durcissable par les UV, contenant
- comme composant réticulable par voie photochimique au moins un époxyacrylate aliphatique ainsi qu'au moins un acrylate du groupe comprenant un époxyacrylate aromatique et un polyesteracrylate,
- au moins un, de préférence deux ou plus, diluant réactif,
- au moins un photo-initiateur,
- au moins une charge et/ou au moins un pigment ainsi que
- un ou plusieurs additifs auxiliaires,
pour le laquage d'essieux de véhicule.

2. Utilisation selon la revendication 1, **caractérisée en ce que** la composition comprend, comme composant réticulable par voie photochimique, au moins un époxyacrylate aliphatique ainsi qu'au moins un époxyacrylate aromatique.

3. Utilisation selon la revendication 1, **caractérisée en ce que** la composition comprend, comme composant réticulable par voie photochimique, au moins un époxyacrylate aliphatique et au moins un polyesteracrylate aliphatique.

4. Utilisation selon l'une quelconque des revendications précédentes, **caractérisée en ce que** les acrylates mentionnés présentent 2 à 20 doubles liaisons éthyléniques par molécule.

5. Utilisation selon l'une quelconque des revendications 1, 2 ou 4, **caractérisée en ce qu'**il s'agit, pour l'époxyacrylate aromatique, d'un époxyacrylate modifié par novolaque, en particulier d'un époxy-novolaque-triacrylate.

6. Utilisation selon l'une quelconque des revendications précédentes, **caractérisée en ce qu'**il s'agit, pour l'époxyacrylate aliphatique, d'un époxyacrylate modifié par polyester, en particulier d'un époxydiacrylate modifié par polyester.

7. Utilisation selon l'une quelconque des revendications 1 ou 3 à 6, **caractérisée en ce qu'**il s'agit, pour le polyesteracrylate, d'un polyesterdiacrylate.

8. Utilisation selon l'une quelconque des revendications précédentes, **caractérisée en ce qu'**elle contient, comme diluant réactif, un acrylate de tétrahydrofurfuryle et/ou un acrylate de 2-phénoxyéthyle.

9. Utilisation selon l'une quelconque des revendications précédentes, **caractérisée en ce qu'**elle contient, comme photo-initiateur, une α-hydroxycétone et/ou une bis-acyl-phosphine.

10. Utilisation selon l'une quelconque des revendications précédentes, **caractérisée en ce qu'**elle contient, comme additif auxiliaire, au moins un promoteur d'adhérence et/ou au moins un antimousse et/ou au moins un additif rhéologique et/ou au moins un épaississant et/ou au moins un agent d'étalement et/ou au moins un dispersant et/ou, comme charge, de la poudre de quartz et/ou du talc et/ou, comme pigment, de la suie, du dioxyde de titane et/ou de l'oxyde de fer.

11. Utilisation selon l'une quelconque des revendications précédentes, **caractérisée en ce qu'**elle contient les constituants suivants, dans les proportions suivantes (les proportions se complétant à 100% en poids) :
- entre 5 et 25% en poids dudit au moins un époxyacrylate aliphatique,
- entre 10 et 35% en poids dudit au moins un époxyacrylate aromatique et/ou entre 10 et 50% au poids dudit au moins un polyesteracrylate,
- entre 20 et 50% en poids dudit au moins un diluant réactif,
- entre 1 et 10% en poids dudit au moins un promoteur d'adhérence,
- entre 1 et 10% en poids dudit au moins un photo-initiateur,
- entre 15 et 35% en poids de ladite au moins une charge et/ou dudit au moins un pigment,
- entre 0,5% en poids et 10% en poids d'au moins un autre additif auxiliaire, outre ledit au moins un promoteur d'adhérence.

12. Utilisation selon l'une quelconque des revendications précédentes, **caractérisée en ce qu'**elle est exempte de solvants.

13. Utilisation selon l'une quelconque des revendications précédentes, **caractérisée en ce qu'**elle présente une viscosité dans la plage entre 100 mPa.s et 2000 mPa.s (déterminée au moyen d'un viscosimètre rotatif selon la norme DIN EN ISO 3219).
